# EUROPÄISCHE PATENTANMELDUNG

(11) **EP 3 466 848 A1**
(43) Veröffentlichungstag der Anmeldung: **10.04.2019**
(21) Anmeldenummer: 18197079.9
(22) Anmeldetag: 27.09.2018
(51) Int. Cl.: B65G 61/00, B25J 13/08, G01B 11/00, G06T 1/00

(54) **VORRICHTUNG UND VERFAHREN ZUR ÜBERPRÜFUNG EINES PALETTIERVORGANGS**

(30) Priorität: 04.10.2017 DE 102017122939
(71) Anmelder: Symplex Vision Systems GmbH, 80686 München (DE)
(72) Erfinder: HUHN, Thomas, 80686 München (DE)
(74) Vertreter: Grünecker Patent- und Rechtsanwälte PartG mbB

(57) **Zusammenfassung**

Eine Vorrichtung zur Überprüfung eines Palettiervorgangs in einem Palettierer weist eine Ladestation mit einer Handhabungsvorrichtung zur Beladung einer Palette mit zumindest einer Lage von Stückgut auf. Ein solches Stückgut kann insbesondere Behälterglas, wie Flaschen, Gläser, Flakons, Vials oder dergleichen in einer vorgegebenen Stückgutszusammenstellung sein. Um schnell und sicher entsprechende Fehler beim Palettieren feststellen und ggf. weitermelden zu können, weist die Vorrichtung zumindest eine bildgebende Vorrichtung mit zumindest einer Kamera und einer Auswerteeinheit auf. Wenigstens die Kamera ist der Ladestation bzw. der Handhabevorrichtung des Palettierers zugeordnet. Durch die Kamera ist eine aktuelle Abbildung von Palette, Zwischen-/Decklage und/oder Stückgutzusammenstellung aufnehmbar und an die Auswerteeinheit zum Vergleich mit einer insbesondere vorgegebenen Stückgutzusammenstellung bzw. Abbildung einer Palette, Zwischen-/ Decklage übermittelbar.

## Beschreibung

Die vorliegende Erfindung bezieht sich auf eine Vorrichtung und ein Verfahren zur Überprüfung eines Palettiervorgangs in einem Palettierer. Ein solcher Palettierer ist i. d. R. Teil eines werkseitigen Systems zum Zusammenstellen, Palettieren, Verpacken und Lagern von Stückgut in einer Stückgutzusammenstellung in ggf. mehreren Stückgutlagen. Dazu wird der Palettierer zunächst mit einer leeren Palette in einer Ladestation des Palettierers bestückt und auf dieser anschließend durch eine entsprechende Handhabungsvorrichtung Stückgut abgelegt. Das Stückgut kann direkt auf einer Oberseite der Palette abgelegt werden, oder ggf. wird vor Ablage des Stückguts eine Zwischenlage auf der Palette aufgebracht. Die Palette ist i. d. R. in ihrer Größe vorgegeben, siehe beispielsweise Europalette oder andere Paletten von normierter Größe. Solche Paletten sind aus Holz oder Kunststoff hergestellt. Eine entsprechende Zwischenablage direkt auf der Palette oder auch zwischen Stückgutlagen besteht beispielsweise aus Papier oder Karton.

Es können mehrere Stückgutlagen auf einer Palette aufgebracht werden. Abschließend kann eine Decklage, ebenfalls aus Papier oder Karton, auf die oberste Stückgutlage aufgebracht und dann die fertig beladene Palette abtransportiert werden.

Die Handhabungsvorrichtung erfasst beispielsweise eine gesamte Stückgutlage, d. h. eine Mehrzahl von Stückgut gleichzeitig, und bringt diese auf der Palette oder Zwischenablage auf. Wie bereits ausgeführt, kann eine Mehrzahl von Stückgutlagen auf einer Palette mit entsprechenden Zwischenlagen aufgebracht werden.

Bei einem entsprechenden Palettierungsvorgang sind unterschiedliche Abweichungen zu einem erwünschten Aufbringen von Stückgut möglich.

Beispielsweise kann ein Stückgut in falscher Positionierung, in falscher Anordnung in der Stückgutzusammenstellung angeordnet werden. Es besteht ebenfalls die Möglichkeit, dass ein Stückgut in der entsprechenden Stückgutzusammenstellung, dem sogenannten Lagebild, steht und fehlerhaft ist. Weitere Fehlermöglichkeiten sind Beschädigungen an der Palette, der Zwischenlage, der Decklage oder auch ein falsches Absetzen von einem Stückgut oder auch einer gesamten Stückgutlage relativ zur Palette oder Zwischenlage. Ebenfalls denkbar ist eine fehlerhafte, fehlende oder falsch positionierte Zwischenlage oder Decklage oder eine fehlerhafte, fehlende oder falsch positionierte Palette.

Aufgabe der Erfindung ist es, eine entsprechende Vorrichtung bzw. ein Verfahren zur Überprüfen aller dieser Fehler bereitzustellen, welche schnell und sicher einen solchen Fehler feststellt und weitermeldet. Diese Aufgabe wird durch die Merkmale der unabhängigen Ansprüche gelöst.

Die erfindungsgemäße Vorrichtung zeichnet sich insbesondere dadurch aus, dass dem Palettierer eine bildgebende Vorrichtung mit zumindest einer Kamera und einer Auswerteeinheit zugeordnet ist. Diese Zuordnung erfolgt insbesondere zur Ladestation des Palettierers, an der die entsprechende Bestückung der Palette mit Stückgut erfolgt. Durch die Kamera wird eine aktuelle Abbildung von Palette und/oder Stückgutzusammenstellung und/oder Zwischenlage oder Decklage aufgenommen und diese aktuelle Abbildung wird an die Auswerteeinheit der bildgebenden Vorrichtung zum Vergleich mit einer insbesondere vorgegebenen Stückgutzusammenstellung bzw. Abbildung von Palette, Zwischenlage oder Decklage übermittelt. Durch Vergleich der aktuellen Abbildung mit dieser Vorlage sind entsprechende Fehler feststellbar. Diese unterschiedlichen Fehler sind bereits im Vorangehenden zumindest teilweise erwähnt worden.

Ausreichend kann eine Kamera sein, die vorzugsweise oberhalb der Palette und/oder oberhalb des Palettierers mit freiem Blick auf die Palette bzw. Stückgutzusammenstellung angeordnet ist. Ein entsprechend freier Blick soll selbstverständlich ebenfalls im Hinblick auf Zwischenlage oder Decklage bestehen, um diese auf entsprechende Fehler zu überprüfen.

Es ist ebenfalls denkbar, dass zwei, drei, vier oder auch mehr Kameras angeordnet sind, die entsprechend einen freien Blick auf Palette, Stückgutzusammenstellung, Zwischenlage oder Decklage, jede für sich oder für zumindest eine Kamera aufweisen.

Bei mehreren Kameras besteht die Möglichkeit, dass z. B. eine Kamera fest einer Mitte der Palette und weitere Kameras Seiten der Palette zugeordnet sind. Die verschiedenen Kameras können auch geneigt zur Palette bzw. Stückgutzusammenstellung angeordnet sein, so dass ein schräges Blickfeld beispielsweise bei einer Kamera vorliegt, während die anderen Kameras senkrecht zur Palette oder Stückgutzusammenstellung ausgerichtet sind. Es ist selbstverständlich ebenfalls denkbar, dass mehrere Kameras ein schräges Blickfeld aufweisen.

Eine entsprechende Optik einer Kamera kann fest oder starr eingestellt sein und eine variable Höhe des entsprechenden Bildfeldes, die durch den schichtweisen Aufbau der Palette und den dadurch variierenden Abstand zwischen zu prüfendem Bildfeld und Kamera nötig wird, kann durch Tiefenschärfe ausgeglichen werden, wobei eine variable Größe des Bildfeldes auch durch Software-Zoom ausgleichbar ist. Alternativ besteht ebenfalls die Möglichkeit, dass durch Software eine variable Skalierung pro Stückgutlage erfolgt, um aus perspektivischer Verzerrung entstehende Änderung der Bildgröße bei weitergehender Stapelung der Stückgutzusammenstellungen auszugleichen.

Ebenfalls denkbar ist eine gesteuerte oder selbst nachführende Fokussierung und/oder Zoom bei entsprechender Optik einer jeden Kamera.

Es wurde bereits darauf hingewiesen, dass bei einer oder mehreren Kameras unterschiedliche Positionierungen relativ zur Palette und den entsprechenden Stückgutlagen möglich sind. Eine Kamera oder eine Anzahl von Kameras kann fest oberhalb der entsprechenden Palette montiert sein, wobei eine Kamera genau mittig über der Palette oder beispielsweise vier Kameras mittig über den Seiten oder vier Kameras über den vier Ecken der Palette anordbar sind. Es besteht selbstverständlich die Möglichkeit, auch mehr als vier Kameras entsprechend zu positionieren oder eine mittig angeordnete mit den vier Kameras über den Seiten oder den Ecken zu kombinieren.

In diesem Zusammenhang ist es weiterhin denkbar, dass eine Bildansicht einer solchen Kamera beispielsweise senkrecht mit einem entsprechenden Bildkegel erfolgt, oder Randstrahlen und Randebenen eines solchen Bildkegels genau entlang von entsprechenden Außenseiten bzw. Außenkanten der Palette verlaufen.

Falls Bauraum am Palettierer oder andere Ursachen eine andere Anordnung bzw. Orientierung der Kamera oder der Kameras erfordern, besteht ebenfalls die Möglichkeit, dass zwischen Kamera und Stückgutzusammenstellung bzw. Palette eine optische Umlenkeinrichtung, ein Spiegel oder dergleichen, angeordnet ist.

Es wurde bereits darauf hingewiesen, dass der Palettierer eine Handhabungsvorrichtung umfasst, mittels der das Stückgut in der Stückgutlage mit entsprechender Stückgutzusammenstellung ablegbar ist. In diesem Zusammenhang besteht die Möglichkeit, dass die Kamera mitfahrend zur Palette und/oder Handhabungsvorrichtung des Palettierers ausgebildet ist. Das heißt, die Palette kann beispielsweise direkt beim Einfahren in die Ladestation durch eine mitfahrende Kamera erfasst und überprüft werden. In diesem Zusammenhang ist es ebenfalls möglich, dass die Kamera mit der Handhabungsvorrichtung des Palettierers mitfährt, so dass insbesondere bei einer Bauart des Palettierers ohne freie Sicht von oben, sich die Kamera oder Kameras mit der Handhabungsvorrichtung bewegen und bei entsprechender Positionierung der Handhabungsvorrichtung eine entsprechende Abbildung von Palette, Zwischenlage oder Stückgutzusammenstellung erzeugen. In der Regel ist bei einem Palettierer ein ausreichendes Umgebungslicht zur Herstellung einer Abbildung durch jede Kamera vorhanden. Dieses Umgebungslicht ist naturgemäß starken Schwankungen unterlegen (Tag, Nacht, Sonneneinfall, ein- oder ausgeschaltete künstliche Beleuchtung etc.), was seitens der Vorrichtung durch eine automatische Erkennung der Bildhelligkeit und eine automatische Nachregelung der Belichtungsparameter der Kamera oder eine automatische Blendensteuerung ausgeglichen werden kann. Allerdings kann es sich als vorteilhaft erweisen, wenn eine eigene Beleuchtung bzw. entsprechende Beleuchtungseinrichtung mit insbesondere einer Helligkeitssteuerung zum Ausleuchten von Palette, Stückgutzusammenstellung oder Zwischenlage angeordnet ist. Eine solche Beleuchtung bzw. Beleuchtungseinrichtung kann direkt der Kamera oder jeder Kamera zugeordnet sein.

Wie bereits ausgeführt, ist die Kamera bzw. sind die Kameras mit einer Auswerteeinheit verbunden. In diesem Zusammenhang besteht die Möglichkeit, dass eine Auswerteeinheit pro Palettierer vorgesehen ist. Das heißt, eine solche Auswerteeinheit ist diskret für einen Palettierer vorhanden. Bei einem anderen Ausführungsbeispiel besteht die Möglichkeit, dass eine zentrale Auswerteeinheit mehreren Palettierern zugeordnet ist. Diese ist dann mit allen Kameras dieser mehreren Palettierer verbunden und verarbeitet dann alle Bilder bzw. Abbildungen dieser Kameras. Dabei erfolgt dann eine entsprechende Zuordnung der aktuellen Abbildung zum jeweiligen Palettierer und dessen Stückgutzusammenstellungen bzw. Paletten und Zwischenablagen.

Es besteht weiterhin die Möglichkeit, die Überprüfung des Palettiervorgangs auf eine Fehlererkennung von Stückgut und/oder Palette und/oder Zwischen- bzw. Decklage auszudehnen, so dass auch eine solche Fehlererkennung durch die erfindungsgemäße Vorrichtung durchführbar ist. Das heißt, es sind beispielsweise Fehler direkt an der Palette, wie etwa Beschädigungen oder dergleichen, Fehler an jeder Zwischenablage, wie etwa Löcher oder Einrisse der Zwischenablage bzw. Deckablage oder auch Fehler an jedem Stückgut erkennbar. Besteht ein solches Stückgut beispielsweise aus Glas, siehe Flaschen, Gläser, Flakons, Vials oder dergleichen, so können Ausbrüche an Öffnung dieses Behälterglases, Beschädigungen in der Wandung, Verschmutzungen oder dergleichen festgestellt werden. Dies betrifft ebenfalls fehlerhafte Paletten, fehlerhafte Zwischen- oder Decklagen und dergleichen, sowie selbstverständlich fehlende oder falsch positionierte Paletten, fehlende oder falsch positionierte Zwischen- oder Decklagen oder auch Fehler in der Stückgutzusammenstellung selbst. Solche Fehler sind beispielsweise fehlendes Stückgut, liegendes Stückgut, falsch positioniertes Stückgut, auf dem Kopf stehendes Stückgut, zerbrochenes Stückgut, überzähliges Stückgut, oben auf einer Stückgutzusammenstellung aufliegendes Stückgut, Fremdkörper, falsches Packbild oder dergleichen.

Die entsprechenden Fehler werden von der Auswerteeinheit selbstständig erkannt und zumindest gespeichert und/oder weitergegeben. Jede Kamera kann im Dauerbetrieb oder in Abhängigkeit vom Betrieb des Palettierers betreibbar sein. Im Dauerbetrieb wird beispielsweise kontinuierlich eine entsprechende Abbildung aufgenommen, wobei allerdings nur solche Abbildungen weiter ausgewertet werden, die beispielsweise die Palette, eine Zwischenlage, eine Decklage oder eine entsprechende Stückgutzusammenstellung betreffen. Abbildungen, die beispielsweise einen leeren Palettierer oder die Handhabungsvorrichtung betreffen, werden für die Überprüfung des Palettiervorgangs i. d. R. nicht verwendet.

Ebenfalls denkbar ist ein Betreiben in Abhängigkeit vom Betrieb des Palettierers. Ein solcher Betrieb kann beispielsweise durch Signalaustausch mit dem Palettierer erfolgen, Dieser liefert Informationen zum Zeitpunkt der Bildaufnahme. Das heißt, sobald durch den Palettierer eine neue Palette in die Ladestation bewegt wurde, kann ein entsprechender Signalaustausch erfolgen, um beispielsweise die Palette zu überprüfen. Dies gilt analog bei Aufbringen einer Zwischenlage, Aufbringen einer Stückgutzusammenstellung oder Aufbringen einer Decklage. Jeweils nach Abschluss des entsprechenden Vorgangs kann dann ein Signalaustausch mit der erfindungsgemäßen Vorrichtung zur Bildaufnahme erfolgen.

Es besteht weiterhin die Möglichkeit, dass jeder Palette und/oder Stückgutzusammenstellung, insbesondere jeder Stückgutlage für eine Identifizierung zuordbar ist. Eine solche Identifizierung kann zur Nachverfolgung der Palette mit den entsprechenden Stückgutlagen einsetzbar sein.

Die Identifizierung kann in diesem Zusammenhang durch die erfindungsgemäße Vorrichtung erfolgen. Das heißt, die erfindungsgemäße Vorrichtung ordnet einer Palette oder Stückgutlage eine Identifizierung zu, die praktisch virtuell vorhanden ist. Entsprechende Informationen zur Palette können durch die erfindungsgemäße Vorrichtung dieser entsprechenden Palette, der jeweiligen Stückgutlage oder auch einem spezifischen Ort in der Stückgutlage zugeordnet werden. Eine solche Identifizierung der Palette kann anhand eines Zeitstempels erfolgen, so dass diese "virtuelle" Palette anhand ihrer Bewegung im werkseitigen System verfolgt wird und bei der Palette jede Stückgutlage und innerhalb der Stückgutlage jedes Stückgut an seinem Ort auffindbar ist. Es besteht ebenfalls die Möglichkeit, dass eine entsprechende Identifizierung zur Nachverfolgung der Palette durch ein werkseigenes Verfolgungssystem stattfindet und diese Identifizierung durch die erfindungsgemäße Vorrichtung der Palette zugeordnet wird.

Dabei besteht weiterhin die Möglichkeit, jede Stückgutlage und jedes Stückgut in jeder Lage weiterhin durch die erfindungsgemäße Vorrichtung zu identifizieren und dieses dann mit der Identifizierung des werkseigenen Systems zu koppeln.

Eine entsprechende Palettenverfolgung kann aufgrund dieser virtuellen Identfizierung durch Zählung, externe Sensorik oder dergleichen erfolgen, so dass eine Palette auch nach Verlassen des Palettierers weiter verfolgbar ist.

Die entsprechenden Ergebnisse für jede Palette können direkt oder auch später zusammen mit einer zugehörigen Palettenidentifizierung weitergegeben oder auch nachträglich einer bestimmten Palette zugeordnet werden.

So ist es denkbar, dass eine Offline-Überprüfung erfolgt. Das heißt, die Palette wird durch die erfindungsgemäße Vorrichtung überprüft und Abbildungen mit den entsprechenden Fehlern können einem Bediener zur nachträglichen, visuellen Kontrolle angeboten werden. Die entsprechende Identifizierung von Palette oder Stückgutlage kann parallel angeboten werden. Die angebotene Information kann die betroffene Palette, die Lage, den genauen Ort eines Fehlers innerhalb einer Lage sowie die genau erkannte Fehlerart enthalten. Kommt der Bediener zu dem Ergebnis, dass die Palette aufgrund der entsprechenden Fehlermeldung nachgearbeitet werden muss, kann er diese aufgrund der Identifizierung lokalisieren und eine manuelle oder automatische Nacharbeit veranlassen.

Bei einer solchen Offline-Funktionalität kann beispielsweise der Bediener nach einer Anzahl von Stunden, beispielsweise nach einer Schicht, einmalig eine solche Überprüfung nach erkannten Fehlern durchführen. Die erfindungsgemäße Vorrichtung kann in diesem Zusammenhang auch nur Abbildungen zur Nachkontrolle zur Verfügung stellen, die spezifische Fehler anzeigen, so dass nur ein geringer Anteil aller aufgenommenen Bilder manuell nachkontrolliert werden muss.

Erfindungsgemäß besteht ebenfalls die Möglichkeit, Fehler direkt an einen Bediener oder direkt an den Palettierer zu melden, so dass der Palettierer angehalten wird und eine direkte manuelle Beseitigung des erkannten Fehlers angefordert wird. Dies hat ggf. den Nachteil, dass ein Rückstau im werkseitigen System, insbesondere stromaufwärts zum Palettierer entstehen kann, wodurch jedoch ein nachträgliches Ent- und Neupalettieren einer betreffenden Palette zur späteren Beseitigung des erkannten Fehlers verhindert wird.

Das heißt, erfindungsgemäß sind unterschiedliche Fehler an Palette, Zwischenlage, Decklage, Stückgutzusammenstellung und Stückgut feststellbar, die vorangehend bereits erwähnt wurden und insgesamt an einen Bediener übermittelbar oder zumindest abspeicherbar sind. Diese sind dann online oder offline abrufbar bzw. weitermeldbar und können entsprechende Reaktionen des Bedieners auslösen.

Um jedes Stückgut einzeln nicht nur in seiner Positionierung sondern insbesondere im Hinblick auf Fehler, Beschädigungen oder Verschmutzungen des Stückguts zu erfassen, kann es sich als günstig erweisen, wenn zumindest eine Kamera oberhalb einer entsprechenden Stückgutlage zum Abfahren eines jeden Stückguts beweglich gelagert ist. Eine solche Bewegung kann durch eine x-y-Bewegungseinrichtung, durch einen Roboter oder dergleichen erfolgen. Dabei kann auch eine entsprechende Kameramatrix verwendet werden. Die Kamera wird ggf. mit eigener Lichtquelle senkrecht oberhalb eines jeden Stückguts oder zumindest kleineren Gruppen von Stückguten angeordnet und überprüft dort das Stückgut auf eigene Fehler. Im Falle von Behälterglas kann ein solcher eigener Fehler beispielsweise ein Fehler im Bereich einer Öffnung oder Mündung, ein teilweise oder vollständig zerbrochenes Behälterglas oder auch ein verschmutztes Behälterglas sein.

Die Auswertung erfolgt ebenfalls durch die entsprechende erfindungsgemäße Auswerteeinrichtung, in dem Fall allerdings nicht nur hinsichtlich eines Vergleichs der aktuellen Abbildung mit einer vorgegebenen Abbildung sondern ggf. hinsichtlich solcher Schäden oder Verschmutzungen. Erfindungsgemäß wird dann also nicht nur die Stückgutzusammenstellung überprüft, sondern auch jedes einzelne Stückgut auf etwaige eigene Fehler. Das heißt, es kann erfindungsgemäß eine Überprüfung eines jeden Stückgutes hinsichtlich eines eigenes Fehlers wie einer Beschädigung etwa an einer Mündung oder dergleichen, eine Überprüfung einer Geometrie des Stückguts, der Position des Stückguts, des Aussehens des Stückguts oder aber auch eine gezielte Suche nach bestimmten Fehlern und dergleichen erfolgen. Entsprechend erfolgt eine Überprüfung sowohl von Position als auch Aussehen oder Fehlerzustand eines jeden Stückguts innerhalb der entsprechenden Stückgutzusammenstellung einer Stückgutlage.

Es ist selbstverständlich ebenfalls erfindungsgemäß möglich, unterschiedliches Stückgut in entsprechenden Stückgutzusammenstellungen anzuordnen und diese zu überprüfen. Dies betrifft ebenfalls die Palette an sich, die Zwischenlage und/oder die Decklage.

Im Folgenden wird ein vorteilhaftes Ausführungsbeispiel der Erfindung anhand der beigefügten Figuren näher erläutert und beschrieben. Dabei zeigen:
- Figur 1: eine seitliche Ansicht einer erfindungsgemäßen Vorrichtung in einem Palettierer;
- Figur 2: eine Draufsicht auf eine Palette in einem Palettierer;
- Figur 3: eine Seitenansicht einer Palette mit einer Anzahl von Stückgutlagen;
- Figur 4: eine Draufsicht auf eine Palette mit einer spezifischen Stückgutzusammenstellung,
- Figur 5: eine Seitenansicht von zwei verschiedenen Paletten mit unterschiedlicher Anzahl von Stückgutlagen, und
- Figur 6: eine Draufsicht auf eine Stückgutlage mit unterschiedlichem Stückgut in verschiedenen Anordnungen.

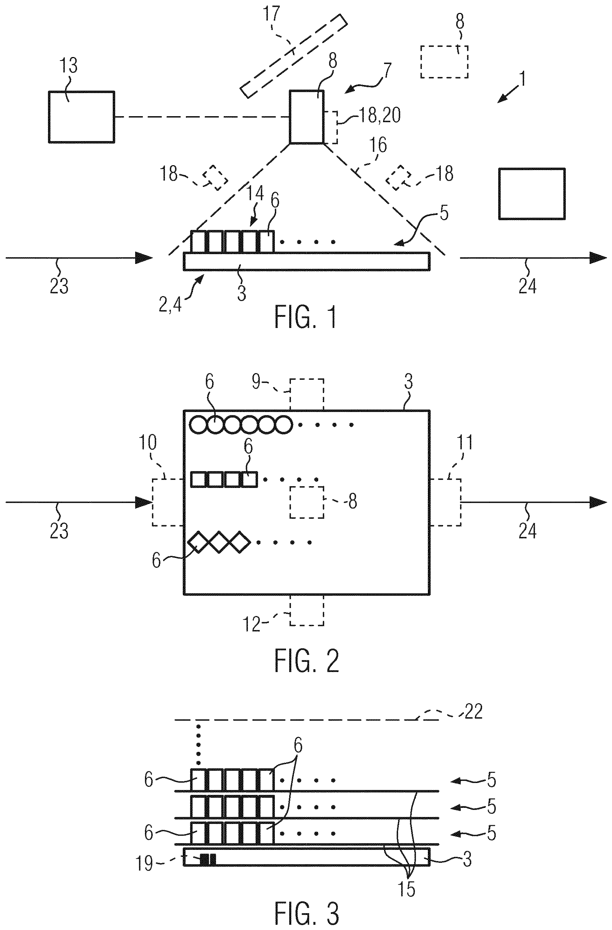

Fig. 1 zeigt eine prinzipielle Seitendarstellung eines Ausführungsbeispiels der erfindungsgemäßen Vorrichtung 1 in Verwendung bei einem Palettierer 2.

Bei einem solchen Palettierer 2 wird eine Stückgutzusammenstellung 14 auf eine Palette 3 aufgestellt, wobei ein solches Aufstellen insbesondere in mehreren Stückgutlagen 5 erfolgt, siehe auch Fig. 3. Das heißt, es wird zuerst eine Palette 3 aus Zuführrichtung 23 in den Palettierer 2 und insbesondere in dessen Ladestation 4 eingeführt. Anschließend wird ggf. eine Zwischenlage 15, siehe nochmals Fig. 3, auf die Palette aufgelegt und dann mittels einer nicht dargestellten Handhabungsvorrichtung eine erste Stückgutlage 5 mit spezieller Stückgutzusammenstellung 14 auf die Palette 3 bzw. die entsprechende Zwischenlage 15 aufgestellt. Anschließend kann eine weitere Zwischenlage 15 auf die erste Stückgutlage 5 aufgelegt und dann wiederum eine weitere Stückgutlage 5 auf diese Zwischenlage 15 aufgestellt werden. Dies erfolgt bis zu einer vorgegebenen Maximalhöhe. Als Abschluss des Palettierens kann eine Decklage 22, siehe Fig. 3, die oberste Stückgutlage 5 abschließen. Anschließend wird die so bestückte Palette von der Ladestation 4 an eine Verpackungsstation zum Aufbringen einer Kunststofffolie oder dergleichen weiter transportiert, siehe Abführrichtung 24 in Fig. 1.

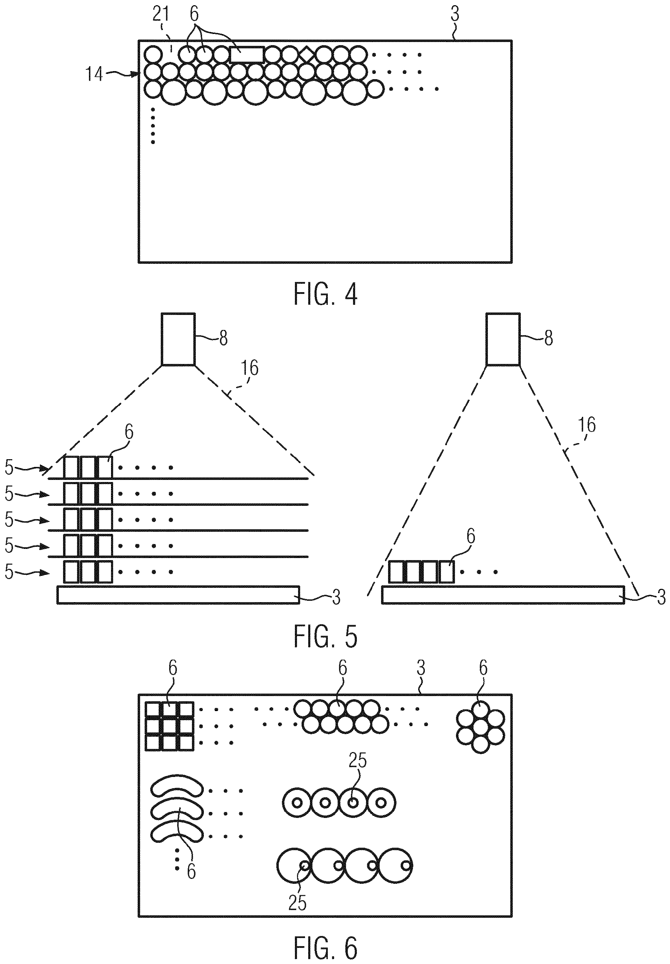

Eine entsprechende Stückgutlage 5 umfasst eine Vielzahl von Stückgut 6, das insbesondere in einem bestimmten Muster und in spezieller Anordnung die Stückgutzusammenstellung 14 bildet. Beispiele für Stückgut sind eine Vielzahl von Gegenständen, die mittels einer Palette zu transportieren sind und insbesondere auch sogenanntes Behälterglas in Form von Flaschen, Gläsern, Flakons, Vials oder dergleichen. Insbesondere gilt als Stückgut jedoch auch die sortenreine Palettierung mit gleichartigen Gegenständen. Die Stückgutzusammenstellung 14 kann in diesem Fall die Ausbildung bestimmter Muster oder die Ausrichtung der einzelnen Gegenstände relativ zur Ausrichtung der Palette bedeuten. Entsprechende Beispiele sind in Fig. 6 dargestellt.

Ladestation 4 des Palettierers 2 ist die erfindungsgemäße Vorrichtung 1 zur Überprüfung des entsprechenden Palettiervorgangs zugeordnet. Die Vorrichtung 1 umfasst zumindest eine bildgebende Vorrichtung mit wenigstens einer Kamera 8 und einer Auswerteeinheit 13. Bei dem dargestellten Ausführungsbeispiel ist die Kamera 8 im Wesentlichen mittig oberhalb einer entsprechenden Palette 3 angeordnet, siehe auch Fig. 2. Eine entsprechende Handhabungsvorrichtung des Palettierers 2 ist in Fig. 1 zur Vereinfachung nicht dargestellt. Eine solche Handhabungsvorrichtung besteht aus einer beweglichen Einrichtung, mittels der in einem Verfahrensschritt das Stückgut einer entsprechenden Stückgutlage 5 mit entsprechender Stückgutzusammenstellung 14 auf die Palette aufstellbar ist. In der Regel bewegt sich eine entsprechende Handhabungsvorrichtung sowohl vertikal als auch horizontal, um das entsprechende Stückgut von einer vorgegebenen Stelle zur Palette zu bewegen. Die mindestens eine Kamera 8 ist so angeordnet, dass sie einen freien Blick auf die entsprechende Stückgutlage 5 zumindest dann hat, wenn die Handhabungsvorrichtung aus dem entsprechenden Bildfeld 16 herausbewegt ist. In der Regel ist die Kamera 8 oberhalb des Palettierers bzw. der Palette angeordnet.

Das Bildfeld 16 umfasst i. d. R. die gesamte Palette, d. h. die gesamte Stückgutzusammenstellung 14, siehe auch Fig. 2. Durch eine Abbildung der Kamera 8 ist also die gesamte Stückgutzusammenstellung 14 einer Stückgutlage 5 erfassbar. Es besteht allerdings auch die Möglichkeit, dass durch Bewegen oder Verschwenken der Kamera 8 nur Teile einer gesamten Stückgutzusammenstellung 14 einer Stückgutlage 5 erfasst und anschließend zu einer Gesamtabbildung zusammengefasst werden. Die Kamera 8 ist mit einer Auswerteeinheit 13 verbunden. Diese empfängt die entsprechende Abbildung von der Kamera 8 und vergleicht die aktuelle Abbildung mit einer vorgegebenen Stückgutzusammenstellung, bzw. einer Abbildung von Palette, Zwischenlage oder Decklage, um Abweichungen oder Fehler feststellen zu können.

Die Kamera 8 nach Fig. 1 weist eine spezifische Optik auf, die beispielsweise starr eingestellt sein kann. Werden dann in den Palettierer unterschiedliche Stückgutlagen 5 aufgebracht, siehe Fig. 3, wird eine Tiefenschärfe der Optik entsprechend zur variablen Höhe der Stückgutlage ausgeglichen, wobei ein solcher Ausgleich auch durch Software-Zoom oder dergleichen erfolgen kann. Es besteht ebenfalls die Möglichkeit, durch entsprechende Software eine variable Skalierung pro Lage durchzuführen. Bei einem weiteren Ausführungsbeispiel gemäß Erfindung kann die Optik alternativ variabel mit gesteuerter oder selbst nachführender Fokussierung und/oder Zoom angepasst werden, siehe hierzu Figur 5.

Bei einem weiteren Ausführungsbeispiel wird nicht nur eine Kamera 8, sondern beispielsweise vier Kameras 9, 10, 11, 12 verwendet, siehe beispielsweise Fig. 2. Diese Kameras sind mittig über den Seiten oder auch ggf. über den Ecken der Palette 3 angeordnet. Andere Anordnungen von Kameras, ggf. auch in Kombination der Kameras 9 - 12 mit Kamera 8 sind möglich.

Insbesondere bei der Kamera 8 kann eine Bildansicht senkrecht von oben erfolgen mit entsprechenden Randstrahlen oder Randebenen des Bildfeldes 16 genau entlang der Außenflächen der Palette, siehe Fig. 1. Dies ist in ähnlicher Weise auch für die Kameras 9 - 12 möglich, die ggf. auch sich überlappende Teile der entsprechenden Stückgutzusammenstellung 14 als Bildfeld verwenden.

Es besteht weiterhin die Möglichkeit, die Kamera 8 oder auch die weiteren Kameras 9 - 12 an anderer Stelle im Palettierer 2 anzuordnen, um beispielsweise durch die Handhabungsvorrichtung weniger beeinflusst zu werden, oder falls der Bauraum des Palettierers dies erfordert. Eine entsprechende Umlenkung des Bildes einer Stückgutzusammenstellung 14 bzw. von Palette, Zwischen- oder Decklage kann durch eine Umlenkeinrichtung 17 erfolgen, die beispielsweise ein Spiegel sein kann.

Es ist erfindungsgemäß ebenfalls möglich, dass eine Kamera einen Blick schräg von oben oder von der Seite auf die entsprechende Bildebene wirft. Dies ist insbesondere dann von Vorteil, wenn neben der Stückgutzusammenstellung 14 auch direkt Fehler, Verschmutzungen oder dergleichen von jedem einzelnen Stückgut 6 erfasst werden sollen. Dies betrifft beispielsweise Behälterglas, das beschädigt ist, beispielsweise durch Bruch im Glas, Ausbrüche an einer Mündung oder dergleichen. Dabei besteht dann ebenfalls die Möglichkeit eine etwaige Verschmutzung des Behälterglases zu erkennen.

Um durch die Handhabungsvorrichtung in noch geringerem Ausmaß beim Erstellen einer Abbildung beeinflusst zu werden, können die Kamera oder Kameras mitfahrend oder beweglich relativ zur Handhabungsvorrichtung des Palettierers 2 ausgebildet sein. Es kann also beispielsweise eine Kamera in der Handhabungsvorrichtung integriert sein, so dass immer ein freies Blickfeld auf den Raum unterhalb der Handhabungsvorrichtung möglich ist. Eine entsprechende Kamera kann allerdings auch unabhängig von der Handhabungsvorrichtung beweglich gelagert sein, um ihre Bewegung einer entsprechenden Bewegung der Handhabungsvorrichtung anzupassen.

Bei der erfindungsgemäßen Vorrichtung ist weiterhin noch zu beachten, dass je nach Umgebungslicht ggf. keine zusätzliche Beleuchtungseinrichtung erforderlich ist. Es besteht allerdings ebenfalls die Möglichkeit, eine Beleuchtungseinrichtung 18 als Teil der Vorrichtung 1 separat vorzusehen, wobei die Beleuchtungseinrichtung eine Reihe von Leuchtmitteln oder Lichtquellen 20 umfassen kann. In diesem Fall wäre die erfindungsgemäße Vorrichtung 1 demnach unabhängig vom Umgebungslicht, wobei bei dieser separaten Beleuchtung eine automatische Helligkeitssteuerung bei der erfindungsgemäßen Vorrichtung vorgesehen sein kann. Dadurch ist beispielsweise ein Einsatz der Beleuchtungseinrichtung 18 der Vorrichtung 1 nur bei unzureichendem Umgebungslicht möglich.

Eine entsprechende Lichtquelle bzw. ein entsprechendes Leuchtmittel 20 kann auch direkt einer Kamera 8 zugeordnet sein, siehe Fig. 1.

In Fig. 1 ist eine entsprechende Auswerteeinheit 13 dargestellt, die bei diesem Ausführungsbeispiel der Vorrichtung 1 jeweils einem Palettierer 2 und damit nur den Kameras an diesem Palettierer zugeordnet ist. Es ist ebenfalls denkbar, dass eine solche Auswerteeinheit als zentrale Auswerteeinheit zumindest einer Anzahl von Palettierern und damit den verschiedenen Kameras bei diesen Palettierern zugeordnet ist. Durch jede dieser Auswerteeinheiten werden die Bilder aller Kameras verarbeitet und die entsprechenden Ergebnisse ausgewertet.

Diese Ergebnisse betreffen beispielsweise unterschiedliche Fehler im Palettierer, wie fehlerhafte Palette, fehlerhafte oder fehlende oder falsch positionierte Palette oder Zwischenlage/Decklage und ebenso auch Fehler in der Stückgutzusammenstellung einer Stückgutlage 5 selbst. Solche Fehler in der Stückgutlage sind beispielsweise fehlendes Stückgut, falsch positioniertes Stückgut, auf dem Kopf stehendes Stückgut, zerbrochenes oder beschädigtes Stückgut, überzähliges Stückgut, oben aufliegendes Stückgut, Fremdkörper, falsche Stückgutzusammenstellung oder falsches Packbild und insbesondere bei Behälterglas auch Schäden an einer Behältermündung, Risse im Behälterglas, zerstörtes Behälterglas sowie ggf. auch verschmutztes Behälterglas.

In Fig. 2 ist eine entsprechende Draufsicht auf eine Palette 3 mit einer Stückgutlage 5 dargestellt, von der nur gewisses Stückgut 6 dargestellt ist. Es besteht die Möglichkeit, dass nur Stückgut der gleichen Art und mit gleichen Abmessungen auf der Palette 3 in einer entsprechenden Stückgutlage 5 angeordnet ist. Es ist ebenfalls möglich, dass unterschiedliches Stückgut in einer Stückgutlage 5 mit entsprechender Stückgutzusammenstellung 14 angeordnet ist.

In Fig. 3 sind eine Reihe von Stückgutlagen 5 übereinander dargestellt, wobei jede Stückgutlage durch zumindest eine Zwischenlage 15 in Form von insbesondere Papier oder Karton von den anderen getrennt ist. Vor Aufstellen einer entsprechenden Stückgutlage 5 ist auch die Oberfläche der Zwischenlage überprüfbar bzw. auch eine Oberfläche einer Decklage 22, siehe wiederum Fig. 3. In jeder Stückgutlage 5 ist selbstverständlich die entsprechende Stückgutzusammenstellung 14 sowie Fehler bei jedem Stückgut überprüfbar.

Die erfindungsgemäße Vorrichtung kann kontinuierlich arbeiten und laufend Abbildungen in Form von Live-Bildern oder dergleichen bereitstellen. Die Auswerteeinheit 13 erfasst alle Live-Bilder und erkennt anhand dieser den Ablauf der Palettierung und kann unterschiedliche Zustände im Palettierer erkennen und ggf. auswerten. Solche Zustände sind beispielsweise noch keine Palette eingeführt, leere Palette vorhanden, Handhabungsvorrichtung für eine Zwischenlage im Bildbereich, Zwischenlage aufgelegt, Handhabungsvorrichtung für Stückgut im Bildbereich, Stückgutlage 5 sichtbar, Handhabungsvorrichtung für Decklage 22 im Bildbereich, Decklage 22 aufgelegt und dergleichen.

Das heißt, die erfindungsgemäße Vorrichtung erfasst in diesem Zusammenhang nicht nur die entsprechende Palettierung, sondern ebenfalls Abläufe im Palettierer und kann entsprechende Auswertungen dazu bereitstellen.

Es besteht ebenfalls die Möglichkeit, die erfindungsgemäße Vorrichtung in Abhängigkeit von Signalen des Palettierers zu steuern. Das heißt, nur zu einem entsprechenden Zeitpunkt erfolgt eine Bildaufnahme. Signalisiert beispielsweise der Palettierer, dass eine neue Palette in die Ladestation 4 eingeführt wurde, so kann die erfindungsgemäße Vorrichtung 1 eine erste Abbildung der Oberfläche der Palette 3 herstellen. Dies gilt analog dann für Aufnahmen einer eingebrachten Zwischenlage, Stückgutlage, Decklage und dergleichen.

Gemäß der erfindungsgemäßen Vorrichtung sind, siehe auch Fig. 4, entsprechende Leerstellen 21 oder die Positionen des Stückguts 6 in einer Stückgutzusammenstellung 14 einer Stückgutlage 5 erfassbar. Dies gilt ebenfalls für falsche Positionierung des Stückgutes, wie bereits oben ausgeführt.

Erfindungsgemäß besteht weiterhin die Möglichkeit, dass in dem Palettierer 2 einer Palette 3 und den entsprechenden Stückgutlagen eine Identifizierung durch die Vorrichtung 1 zugeordnet wird. Das heißt, bei Einführen einer neuen Palette wird dieser durch die erfindungsgemäße Vorrichtung 1 eine Identifizierung zugeordnet, wobei dies ebenfalls bei jeder Zwischenlage, einer Decklage und jeder Stückgutlage 5 erfolgen kann. Durch eine solche Identifizierung können Informationen der Palette, ihrer Zwischenlagen, ihrer Decklage und jeder Stückgutlage zugeordnet werden und entsprechend im werkseitigen Gesamtsystem, von dem der Palettierer 2 ein Teil ist, zur Weiterverfolgung der Palette und Identifizierung von Stückgut verwendet werden. Insbesondere bei Auftreten eines Fehlers, siehe die obigen Ausführungen, ist durch diese Identifizierung über Palette und Stückgutlage jedes einzelne Stückgut 6 identifizierbar, bei dem ggf. ein Fehler aufgetreten ist. Dies gilt analog auch für Fehler der Palette, der Zwischen- oder Decklage.

Es besteht ebenfalls die Möglichkeit, dass durch die erfindungsgemäße Vorrichtung 1 eine werkseigene Identifizierung 19, siehe Fig. 3, übernommen wird, um eine entsprechende Palette 3 zu identifizieren. Durch die erfindungsgemäße Vorrichtung 1 kann dann noch eine weitere Information zu den entsprechenden Stückgutlagen, zu jedem Stückgut oder auch zu jeder Deck- und Zwischenlage erfolgen.

Mittels der Überprüfung der verschiedenen Abbildungen durch die Auswerteeinheit 13 kann bei erkannten Fehlern einem Bediener eine entsprechende Information übermittelt werden. Diese Information kann zur nachträglichen visuellen Kontrolle verwendet werden, siehe in diesem Zusammenhang auch die Identifizierung von Palette oder einzelnem Stückgut. Das heißt, der Bediener kann bei Auftreten eines Fehlers diesen genau in der entsprechenden Palette und ihren Stückgutlagen lokalisieren und ggf. ein manuelles Nacharbeiten veranlassen. Die Information kann auch zu einem späteren Zeitpunkt für eine Reihe von beladenen Paletten bereitgestellt werden, so dass ein Bediener nur zu bestimmten Zeitpunkten alle entsprechenden Fehlermeldungen überprüft und ggf. eine Nacharbeit veranlasst. Dabei ist nur ein geringer Arbeitsaufwand erforderlich und die Funktion des Palettierers wird nicht beeinflusst, so dass dieser kontinuierlich arbeiten kann.

Es besteht ebenfalls die Möglichkeit, dass bei Erkennen eines Fehlers sofort ein Eingriff durch einen Bediener erfolgt, um den Fehler an Palette, Zwischenlage, Stückgutlage, Decklage oder an einzelnem Stückgut zu beseitigen. Dazu wird allerdings der Palettierer in seinem Betrieb unterbrochen, so dass sich ein Stau von weiterhin zugeführten Paletten und Stückgut ergeben kann.

Erfindungsgemäß kann eine Überwachung des Palettierers hinsichtlich einer Vielzahl von Fehlern erfolgen, wie beispielsweise Überprüfen eines jeden Stückguts auf Geometrie, Ort, Aussehen oder auch gezielte Suche nach bestimmten Fehlern des Stückguts, wie beispielsweise Risse im Stückgut, Ausbrüche in einer Mündung 25, siehe Figur 6, zerbrochenes Stückgut o. ä. Weiterhin wird auf jeden Fall eine entsprechende Stückgutposition überprüft, um insgesamt die Stückgutzusammenstellung 14 einer Stückgutlage 5 zu überprüfen. Ebenfalls werden Oberfläche der Palette, Ausrichtung und Position der Palette, Zwischen- und Decklagen hinsichtlich Fehlern, Verschmutzungen, Vorhandensein oder Ausrichtung und dergleichen überprüft. Es besteht erfindungsgemäß die Möglichkeit, dass beispielsweise die Überprüfung eines jeden Stückguts und eine Überprüfung der übrigen Fehler durch unterschiedliche Kameras erfolgen kann. Es ist auch eine Einschränkung der erfindungsgemäßen Vorrichtung, beispielsweise nur auf Überprüfen der Stückgutzusammenstellung 14 möglich, ohne Feststellen von etwaigen Fehlern beim Stückgut selbst.

Weiterhin besteht erfindungsgemäß die Möglichkeit, dass zumindest eine Kamera sich über die Stückgutzusammenstellung 14 bewegt, um jedes Stückgut 6 einzeln zu überprüfen. Eine solche Bewegung kann beispielsweise durch eine Kameramatrix oder eine durch einen Roboter oder in x-y-Richtung bewegte Kamera erfolgen, wobei die Kamera beispielsweise mit eigener Lichtquelle, siehe Fig. 1, versehen ist und bei Behälterglas auch jede einzelne Mündung eines Behälterglases zuordbar ist zur Überprüfung. Selbstverständlich sind auch Gruppen von Mündungen oder Behälterglas überprüfbar und separat auswertbar.

## Patentansprüche

1. Vorrichtung zur Überprüfung eines Palettiervorgangs in einem Palettierer (2), welcher wenigstens eine Ladestation (4) mit einer Handhabungsvorrichtung aufweist zur Beladung einer Palette (3) mit zumindest einer Lage von Stückgut (6), insbesondere Behälterglas, wie Flaschen, Gläser, Flakons, Vials oder dergleichen in einer vorgegebenen Stückgutzusammenstellung (14),
**dadurch gekennzeichnet, dass**
die Vorrichtung zumindest eine bildgebende Vorrichtung (7) mit zumindest einer Kamera (8 - 12) und einer Auswerteeinheit (13) aufweist, wobei wenigstens die Kamera (8 - 12) der Ladestation (4) bzw. der Handhabevorrichtung zugeordnet ist, und wobei durch die Kamera (8 - 12) eine aktuelle Abbildung von Palette (3), Zwischen-/Decklage und/oder Stückgutzusammenstellung (14) aufnehmbar und an die Auswerteeinheit (13) zum Vergleich mit einer insbesondere vorgegebenen Stückgutzusammenstellung bzw. Abbildung einer Palette, Zwischen-/Decklage übermittelbar ist.

2. Vorrichtung nach Anspruch 1, **dadurch gekennzeichnet, dass** die Kamera (8 - 12) oberhalb der Palette (3) und/oder oberhalb des Palettierers (2) mit freiem Blick auf die Stückgutzusammenstellung (14) angeordnet ist, wobei insbesondere zwei, drei, vier oder mehr Kameras (8 -12) angeordnet sind, und vorzugsweise die Kameras (8 -12) fest einer Mitte und/oder Seiten der Palette (3) zugeordnet sind.

3. Vorrichtung nach einem der vorangehenden Ansprüche, **dadurch gekennzeichnet, dass** eine Optik einer jeden Kamera (8 - 12) fest eingestellt ist und eine variable Höhe/Größe eines Bildfeldes durch Änderung einer Tiefenschärfe und/oder durch Software-Zoom ausgleichbar ist, wobei insbesondere eine Optik einer jeden Kamera (8 -12) mit gesteuerter oder selbst nachführender Fokussierung und/oder Zoom ausgebildet ist.

4. Vorrichtung nach einem der vorangehenden Ansprüche, **dadurch gekennzeichnet, dass** zwischen Kamera (8 - 12) und Stückgutzusammenstellung (14) auf einer entsprechenden Stückgut- bzw. Palettenlage (5) eine optische Umlenkeinrichtung (17) angeordnet ist, und/oder die Kamera (8 - 12) mitfahrend zur Palette (4) und/oder Handhabungsvorrichtung des Palettierers (2) ausgebildet ist.

5. Vorrichtung nach einem der vorangehenden Ansprüche, **dadurch gekennzeichnet, dass** eine Beleuchtungseinrichtung (18) mit insbesondere Helligkeitssteuerung zur Ausleuchtung der Stückgutzusammenstellung (14) angeordnet ist.

6. Vorrichtung nach einem der vorangehenden Ansprüche, **dadurch gekennzeichnet, dass** eine Auswerteinheit (13) pro Palettierer (2) vorgesehen ist, und insbesondere eine zentrale Auswerteeinheit (13) mehrerer Palettierern (2) zugeordnet ist.

7. Vorrichtung nach einem der vorangehenden Ansprüche, **dadurch gekennzeichnet, dass** die Kamera (8 - 12) im Dauerbetrieb oder in Abhängigkeit vom Betrieb des Palettierers (2) betreibbar ist.

8. Vorrichtung nach einem der vorangehenden Ansprüche, **dadurch gekennzeichnet, dass** jeder Palette (3) und/oder Stückgutzusammenstellung (14) insbesondere jeder Stückgutlage (5) eine Identifizierung (19) zuordbar ist, und insbesondere eine Identifizierung (19) mittels eines werkseigenen Identifizierungssystems durchführbar ist, und/oder die Identifizierung (19) zur Nachverfolgung der Palette (3) einsetzbar ist.

9. Vorrichtung nach einem der vorangehenden Ansprüche, **dadurch gekennzeichnet, dass** bei Fehlererkennung durch Vergleich von aktueller Abbildung und vorgegebener Abbildung eine Fehlermeldung abspeicherbar und/oder übermittelbar ist, und insbesondere zusätzlich eine Fehlererkennung von Stückgut (6) und/oder Palette (3) und/oder Zwischenlage (15) durchführbar ist.

10. Vorrichtung nach einem der vorangehenden Ansprüche, **dadurch gekennzeichnet, dass** zumindest eine Kamera (8) oberhalb der Stückgutlage (5) zum Anfahren jedes Stückguts (6) einer Stückgutzusammenstellung (14) beweglich gelagert ist, und/oder der Kamera (8 - 12) eine Lichtquelle (20) zugeordnet ist.

11. Verfahren zur Überprüfung eines Palettiervorgangs in einem Palettierer, welcher zum Beladen wenigstens einer Palette (3) in einer Ladestation (4) mit zumindest einer Lage von Stückgut (6) in einer insbesondere vorgegebenen Stückgutzusammenstellung (14) ausgebildet ist,
**gekennzeichnet durch**
Aufnehmen einer aktuellen Abbildung einer Palette (3), Zwischen-/Decklage und/oder Stückgutzusammenstellung (14) mittels zumindest einer Kamera (8 - 12) einer bildgebenden Vorrichtung (7), wobei die bildgebende Vorrichtung der Ladestation (4) bzw. dem Palettierer (2) zugeordnet ist,
Übermitteln der aktuellen Abbildung an eine Auswerteeinheit (13) der bildgebenden Vorrichtung (7), und
Erkennen von zumindest Fehlern mittels der aktuellen Abbildung und/oder
Vergleichen der aktuellen Abbildung mit einer vorgegebenen Stückgutzusammenstellung bzw. Abbildung einer Palette (3) oder Zwischen-/Decklage (15).

12. Verfahren nach Anspruch 11, **gekennzeichnet durch** ein starres Einstellen einer Optik der Kamera (8 - 12) und Ausgleich einer variablen Höhe eines Bildfeldes durch Anpassen der Tiefenschärfe und/oder Software-Zoom, und/oder variables Skalieren der Abbildung durch die Kamera (8 - 12) pro Stückgutlage (5).

13. Verfahren nach einem der vorangehenden Ansprüche 11 oder 12, **gekennzeichnet durch** gesteuertes oder selbst nachführendes Fokussieren und/oder Zoomen bei variabler Optik der Kamera (8 - 12), und/oder Mitfahren oder Mitbewegen der Kamera (8 - 12) auf einer Handhabungsvorrichtung des Palettierers (2) bzw. mit der Handhabungsvorrichtung, und insbesondere Verarbeiten der Abbildung jeder Kamera (8 - 12) in der Auswerteeinheit (13) und Zuordnen der verarbeiteten Abbildung zum jeweiligen Palettierer (2) und/oder zur jeweiligen Palette (3) und/oder zur jeweiligen Zwischenlage und/oder zur jeweiligen Stückgutlage (5).

14. Verfahren nach einem der vorangehenden Ansprüche 11 bis 13, **gekennzeichnet durch** Auswerten der verarbeiteten Abbildung hinsichtlich verschiedener Zustände des Palettierers (2), wie z. B. leere Palette, keine Palette, Handhabungsvorrichtung für Aufbringen der Zwischenlage im Bildbereich, Zwischenlage aufgelegt, Handhabungsvorrichtung für Stückgut im Bildbereich, Stückgutlage sichtbar, Handhabungsvorrichtung für Decklage im Bildbereich, Decklage aufgelegt usw., und/oder Auswerten von Signalen des Palettierers (2) zur Steuerung der Kamera.

15. Verfahren nach einem der vorangehenden Ansprüche 11 bis 14, **gekennzeichnet durch** Identifizieren von Stückgut (6), Stückgutlage (5) und/oder Palette (3) mittels der Abbildung und Weitergabe der Identifizierung an ein werkseigenes System, in dem der Palettierer (2) integriert ist, zur Weiterverfolgung von Stückgut, Stückgutlage und/oder Palette, und/oder Speichern und/oder Übermitteln von Fehlermeldungen von der Auswerteeinheit (13) an einen Bediener und/oder an ein werkseitiges System, in dem der Palettierer (2) integriert ist.

16. Verfahren nach einem der vorangehenden Ansprüche 11 bis 15, **gekennzeichnet durch** Überprüfen eines jeden Stückguts (6) hinsichtlich einer Beschädigung oder weiterer Fehler und Zuordnen einer entsprechenden Fehlermeldung zum Stückgut (6), und insbesondere Anordnen und/oder Bewegen von zumindest einer Kamera (8 - 12) zum Überprüfen des Stückguts (6) auf Beschädigung und/oder weitere Fehler.
